# EUROPEAN PATENT APPLICATION

(11) **EP 1 536 652 A1**
(43) Date of publication of application: **01.06.2005**
(21) Application number: 03292983.8
(22) Date of filing: 28.11.2003
(51) Int. Cl.: H04Q 7/22

(54) **System, method and network elements for transmitting multicast information via a Radio Network Controller not supporting multicast transmission**

(71) Applicant: ALCATEL, 75008 Paris (FR)
(72) Inventor: Van Ewijk, Adrianus Johannes, 2000 Antwerp (BE); Thiebaut, Laurent Jean André, 92160 Antony (FR)
(74) Representative: Narmon, Gisèle Marie Thérèse

(57) **Abstract**

Systems with support nodes (30) for transmitting multicast information to terminals (40) via radio networks controlled by radio network controllers (33) are provided with service detectors (54) for detecting multicast services supported by the radio networks and with contact instructors (55) for, in response to negative detection results, instructing the radio networks to contact the terminals (40) individually instead of contacting the terminals (34-39) as a group. Only radio network controllers (33) located in hotspot areas (81) need to be adapted to handle the multicast service. The terminals (40) comprise identifier selectors (43) for selecting access point identifiers to be sent to the support nodes (33) for identifying an individual bearer to be used for transmitting the multicast information, and identifier detectors (44) for detecting the access point identifier in a bearer set up message. The support nodes (33) further comprise identifier suppliers (56) for supplying the access point identifier received from the terminal (40) to the bearer set up message.

## Description

The invention relates to a system comprising a support node, a radio network controller and terminals for transmitting multicast information from the support node to the terminals via a radio network controlled by the radio network controller.

Such a system is for example a universal mobile telecommunication system or a general packet radio system.

A prior art system is of common general knowledge, and defines a support node, a radio network controller and terminals being all adapted to handle a multicast service. Thereto, a group identifier has been defined for identifying a multicast channel. The support node informs a group of terminals of this group identifier. Each terminal responds by sending back a message comprising this group identifier to the support node. The support node also provides this group identifier to the radio network controller. The multicast information transmitted from the radio network controller to the terminals via the multicast channel can be received by the group of terminals due to only these terminals monitoring this multicast channel as identified by the group identifier.

Such a multicast service optimises the transport of the multicast information in the non-radio network, located between one side of the support node and the radio network controller and at the other side of the support node, as well as in the radio network, located between the radio network controller and the terminals. To be able to use the group identifier, the radio network controller must be adapted to handle the multicast service. The adaptations of all radio network controllers in a large region like for example a country is however time-consuming and expensive.

The known system is disadvantageous, inter alia, due to requiring each radio network (controller) to be adapted to handle the multicast service.

It is an object of the invention, inter alia, to provide a system as defined above in which a radio network (controller) does not necessarily need to be adapted to handle the multicast service.

The system according to the invention is characterised in that the system comprises
- a service detector for detecting a multicast service supported by at least a part of the radio network; and
- a contact instructor for, in response to a negative detection result, instructing at least a part of the radio network to contact the terminals individually

By introducing, for example in the support node, a service detector and a contact instructor, the support node can detect whether the radio network controller supports one or more multicast services, and if the radio network controller supports one or more multicast services, the support node can detect which multicast service is and/or which multicast services are supported by the radio network controller. In response to a negative detection result (indicating that the radio network controller either does not support a multicast service or supports an other different multicast service which is not supported by the support node), the support node can instruct the radio network controller to contact the terminals individually, instead of contacting the terminals as a group. So, the multicast information can now be delivered independently of whether the radio network controller is adapted to handle the (same) multicast service.

As a result, for example only those radio network controllers located in so-called hotspot areas need to be adapted to handle the multicast service, due to these hotspot areas like for example a stadium, a shopping center etc. requiring the multicast service to be offered most efficiently via the multicast channel. Those radio network controllers located in so-called non-hotspot areas do not need to be adapted to handle the multicast service, due to these non-hotspot areas allowing the multicast service to be offered less efficiently via individual channels. When not adapting radio network controllers in certain areas, time and money are saved advantageously.

Further detections are not to be excluded, like, for example, a detection of a malfunction in a multicast part of a radio network controller in which case the multicast information must be delivered individually, or a detection of a too low number of terminals with a subscription to a multicast service in which case the multicast information could be delivered individually, although the radio network controller is adapted to handle the multicast service and would have allowed the use of a multicast channel.

An embodiment of the system according to the invention is characterised in that the support node is a general packet radio service support node, in that the multicast service is a multimedia broadcast multicast service, in that the negative detection result indicates that the radio network controller does not support the multimedia broadcast multicast service, and in that the terminals are contacted individually through paging.

The support node in the form of a general packet radio service support node may further comprise two or more parts, like for example a serving general packet radio service support node coupled to the radio network controller and a gateway general packet radio service support node coupled to the serving general packet radio service support node and to a core network.

An embodiment of the system according to the invention is characterised in that at least one terminal comprises
- an identifier selector for selecting an access point identifier to be sent to the support node for identifying an individual bearer to be used for transmitting the multicast information to the terminal; and
- an identifier detector for detecting the access point identifier in a bearer set up message transmitted to the terminal; with the support node comprising
- an identifier supplier for supplying the access point identifier received from the terminal to the bearer set up message to be transmitted to the terminal.

By introducing, in the terminal, an identifier selector and an identifier detector, and in the support node, an identifier supplier, the terminal can select an access point identifier and send it to the support node, the support node receives this access point identifier and identifies an individual bearer and transmits a bearer set up message to the terminal, which terminal is then informed of the individual bearer to be used for the multicast service.

An embodiment of the system according to the invention is characterised in that the access point identifier is a network service access point identifier to be used for a multimedia broadcast multicast service, and in that the bearer set up message is a radio access bearer set up message.

The network service access point identifier identifies an individual network service access point used for an individual bearer. Such an individual bearer for example corresponds with an individual channel defined by a combination of for example an individual frequency and/or an individual time-slot and/or an individual code etc.

The invention further relates to a support node for use in a system comprising the support node, a radio network controller and terminals for transmitting multicast information from the support node to the terminals via the radio network controller.

The support node according to the invention is characterised in that the support node comprises
- a service detector for detecting a multicast service supported by the radio network controller; and
- a contact instructor for, in response to a negative detection result, instructing the radio network controller to contact the terminals individually.

The invention yet further relates to a support node processor program product for use in a system comprising a support node, a radio network controller and terminals for transmitting multicast information from the support node to the terminals via the radio network controller.

The support node processor program product according to the invention is characterised in that the support node processor program product comprises
- a service detecting function for detecting a multicast service supported by the radio network controller; and
- a contact instructing function for, in response to a negative detection result, instructing the radio network controller to contact the terminals individually.

The invention also relates to a terminal for use in a system comprising a support node, a radio network controller and the terminal for transmitting multicast information from the support node to the terminal via the radio network controller.

The terminal according to the invention is characterised in that the terminal comprises
- an identifier selector for selecting an access point identifier to be sent to the support node for identifying an individual bearer to be used for transmitting the multicast information to the terminal; and
- an identifier detector for detecting the access point identifier in a bearer set up message transmitted to the terminal.

The invention yet also relates to a terminal processor program product for use in a system comprising a support node, a radio network controller and a terminal for transmitting multicast information from the support node to the terminal via the radio network controller.

The terminal processor program product is characterised in that the terminal processor program product comprises
- an identifier selecting function for selecting an access point identifier to be sent to the support node for identifying an individual bearer to be used for transmitting the multicast information to the terminal; and
- an identifier detecting function for detecting the access point identifier in a bearer set up message transmitted to the terminal.

Embodiments of the support node according to the invention and of the support node processor program product according to the invention and of the terminal according to the invention and of the terminal processor program product according to the invention correspond with the embodiments of the system according to the invention.

The invention further also relates to a radio network controller for use in a system comprising a support node, the radio network controller and terminals for transmitting multicast information from the support node to the terminals via a radio network controlled by the radio network controller.

The radio network controller according to the invention is characterised in that the radio network controller comprises
- a service detector for detecting a multicast service supported by at least a part of the radio network; and
- a contact instructor for, in response to a negative detection result, instructing at least a part of the radio network to contact the terminals individually.

In this case, the service detector and the contact instructor are introduced in for example the radio network controller, which can detect whether a part of the radio network supports one or more multicast services, and if the part of the radio network supports one or more multicast services, the radio network controller can detect which multicast service is and/or which multicast services are supported by the part of the radio network. This part of the radio network for example corresponds with one or more base stations or one or more other nodes like a so-called "node B". In response to a negative detection result (indicating that the part of the radio network either does not support a multicast service or supports an other different multicast service which is not supported by the radio network controller), the radio network controller can instruct the part of the radio network to contact the terminals individually, instead of contacting the terminals as a group. So, the multicast information can now be delivered independently of whether the entire radio network as controlled by the radio network controller is adapted to handle the (same) multicast service.

As a result, per radio network controller, parts of its radio network can be adapted to handle the multicast service, without the requirement that the entire radio network as controlled by the radio network controller is to be adapted (at the same time).

The invention yet further also relates to a radio network controller processor program product for use in a system comprising a support node, a radio network controller and terminals for transmitting multicast information from the support node to the terminals via a radio network controlled by the radio network controller.

The radio network controller processor program product according to the invention is characterised in that the radio network controller processor program product comprises
- a service detecting function for detecting a multicast service supported by at least a part of the radio network; and
- a contact instructing function for, in response to a negative detection result, instructing at least a part of the radio network to contact the terminals (40) individually.

The invention relates too to a method for transmitting multicast information from a support node to terminals via a radio network controlled by a radio network controller.

The method according to the invention is characterised in that the method comprises the steps of
- detecting a multicast service supported by at least a part of the radio network; and
- in response to a negative detection result, instructing at least a part of the radio network to contact the terminals individually.

An embodiment of the method according to the invention is characterised in that the support node is a general packet radio service support node, in that the multicast service is a multimedia broadcast multicast service, in that the negative detection result indicates that the radio network controller does not support the multimedia broadcast multicast service, and in that the terminals are contacted individually through paging.

An embodiment of the method according to the invention is characterised in that the method comprises the steps of
- selecting, in at least one terminal, an access point identifier to be sent to the support node for identifying an individual bearer to be used for transmitting the multicast information to the terminal;
- supplying, in the support node, the access point identifier received from the terminal to a bearer set up message to be transmitted to the terminal; and
- detecting, in at least one terminal, the access point identifier in the bearer set up message transmitted to the terminal.

An embodiment of the method according to the invention is characterised in that the access point identifier is a network service access point identifier to be used for a multimedia broadcast multicast service, and in that the bearer set up message is a radio access bearer set up message.

The invention is based upon an insight, inter alia, that it would be time-consuming and expensive to adapt all radio network controllers in a large region to be able to handle a multicast service, and is based upon a basic idea, inter alia, that certain radio network controllers and/or parts of a radio network as controlled by the radio network controller in the large region do not need to be adapted (at the same time), in which case it must be detected whether a radio network controller and/or a part of the radio network supports a multicast service or not, when supporting the multicast service, a multicast channel is to be used, when not supporting the multicast service, individual channels are to be used.

The invention solves the problem, inter alia, to provide a system in which a radio network (controller) does not necessarily need to be adapted to handle the multicast service, and is advantageous, inter alia, in that time and money can be saved.

These and other aspects of the invention will be apparent from and elucidated with reference to the embodiments(s) described hereinafter.
Fig. 1 shows an overview of messages and information to be exchanged in a system according to the invention; and
Fig. 2 shows in block diagram form a system according to the invention comprising a support node according to the invention and a terminal according to the invention.

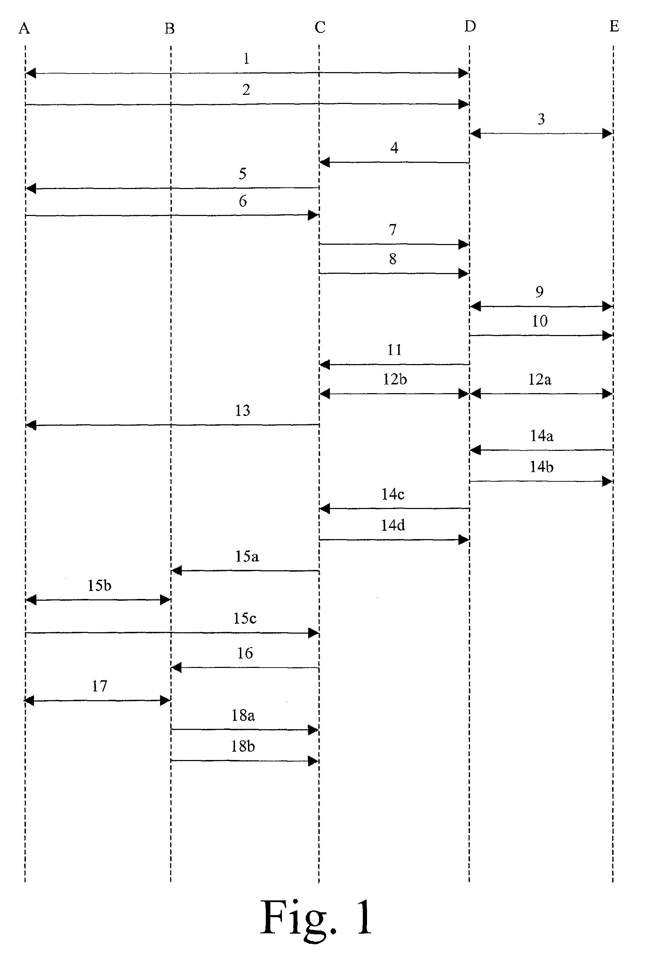

In the overview of messages and information to be exchanged in a system according to the invention, a terminal is indicated by A, a radio network controller is indicated by B, a serving (general packet radio system) support node is indicated by C, a gateway (general packet radio system) support node is indicated by D, and a core network is indicated by E. In this overview the arrows indicated the following messages and information:
Arrow 1: The terminal A activates a default best effort packet data protocol context (for example for an internet access) through an exchange of context signalling with the gateway support node D (this two-sided arrow indicates that, for the set-up of a default packet data protocol, context signalling between the terminal A and the network in both directions is needed to create context information in the serving support node C and the gateway support node D and to set-up a radio access bearer in the radio access network; there is information storage in the serving support node C and the gateway support node D and the radio network controller B and the terminal A for this context and resources are reserved on the links; the terminal A sends in uplink a request for the setup of the packet data protocol context, indicating the quality of service (best effort in this case); the gateway support node D provides the terminal A with a (personal) internet protocol address in downlink direction; the role of the serving support node C is hereby also to admit the setup of the packet data protocol context by the terminal A and to request from the radio access network (radio network controller B) the setup of radio bearers; after arrow 1, the terminal A has a virtual layer-2 link with the gateway support node D (the gateway to external networks, like for example the internet) and the terminal A has got an internet protocol address).
Arrow 2: The terminal A sends an Internet Engineering Task Force (IETF) internet multicast group management protocol joining message (for internet protocol version-4) or a multicast listeners discovery protocol joining message (for internet protocol version-6) to activate a multimedia broadcast multicast service on the default packet data protocol context.
Arrow 3: Signaling information is exchanged between the gateway support node D and the core network E (the gateway support node D has interaction with a broadcast multicast service center - for example forming part of the core network E or alternatively located between the gateway support node D and the core network in which case this broadcast multicast service center could be indicated by E - to check whether a user that wants to join a multicast service is authorised to do so; the gateway support node D request the broadcast multicast service center to authorise a terminal A that wants to join a multicast service; the gateway support node D indicates a mobile subscriber integrated service digital network number (MSISDN) or a international mobile subscriber identity (IMSI) to the broadcast multicast service center, the broadcast multicast service center provides back the OK).
Arrow 4: The serving support node C receives a multimedia broadcast multicast service notification from the gateway support node D, indicating the terminal A identity like an international mobile subscriber identification (IMSI) and a service identity (an internet protocol multicast address IP MC@).
Arrow 5: The serving support node C sends a request multimedia broadcast multicast service context activation to the terminal A indicating the service identity (IP MC@) and a temporary mobile group identifier (TMGI).
Arrow 6: The terminal A selects a particular network service access point identifier (NSAPI) from its default range or based on a linked network service access point identifier (NSAPI) proposed by the core network E (and remembers that this network service access point identifier is for the multimedia broadcast multicast service) via arrows 4,5 for a multimedia broadcast multicast service and sends an activate multimedia broadcast multicast service context request to the serving support node C, indicating the service identity (IP MC@) and the selected network service access point identifier (NSAPI).
Arrow 7: The serving support node C sends a multimedia broadcast multicast service notification response comprising the international mobile subscriber identification (IMSI) to the gateway support node D.
Arrow 8: The serving support node C requests the establishment of the multimedia broadcast multicast service context to the gateway support node D and the core network E authorizes the activation of the service for the terminal A.
Arrow 9: Signaling information is exchanged between the gateway support node D and the core network E (arrow 9 exist because the terminal A may need to be authorised at packet data protocol level as well: arrow 3 authorises the terminal A at service level, while arrow 9 authorises the terminal A at bearer level: the gateway support node D sends again the mobile identity (MSISDN) and for example the broadcast multicast service center sends a response with OK).
Arrow 10: Beyond the gateway support node D, i.e. on the right side of the gateway support node D in Fig. 1, between the gateway support node D and for example the broadcast multicast service center a bearer has to be setup.
Arrow 11: At a successful multimedia broadcast multicast service context setup by the gateway support node D, the serving support node C receives a create multimedia broadcast multicast service context response. The serving support node C checks whether the radio network controller B, which controls and communicates with the terminal A, supports the multimedia broadcast multicast service. This done through a communication with the radio network controller B or with another entity or by checking an internal memory. In case the multimedia broadcast multicast service is not supported by the radio network controller B, the serving support node C skips the prior art multimedia broadcast multicast service terminal A linking procedure.
Arrows 12a,b: The serving support node C performs a standardised registration procedure (according to 3GPP TS 23.846).
Arrow 13: The serving support node C sends an activate multimedia broadcast multicast service context accept to the terminal A to indicate a successful activation of the multimedia broadcast multicast service context.
Arrow 14a,b,c,d: At the beginning of a multimedia broadcast multicast service session, the gateway support node D receives a session start message from the core network E. The gateway support node D indicates the session start to the serving support node C, providing the service identity (IP MC@) and the temporary mobile group identifier (TMGI). The serving support node C knows that the radio network controller B does not support the multimedia broadcast multicast service and decides that dedicated bearers need to be set up towards the terminal A.
Arrow 15a: The serving support node C instructs the radio network controller B to contact all terminals A, which have activated the multimedia broadcast multicast service identified by the service identity (IP MC@), individually, using for example a standardised paging technology based on the international mobile subscriber identification IMSI/P-TMSI (P-TMSI = Packet TMSI = temporary mobile service identity, P-TMSI is the temporary identifier that is assigned by the network to the terminal A to serve as replacement for the international mobile subscriber identity IMSI; the P-TMSI exists as temporary identifier for security reasons - to avoid sending the international mobile subscriber identity IMSI all the time, but to use a temporary pseudo random identifier: the P-TMSI).
Arrow 15b: The terminal A requests the setup of a signaling connection with the radio network controller B.
Arrow 15c: The terminal A sends a service request to the serving support node C indicating that it's ready to receive the multicast information.
Arrow 16: The serving support node C requests the setup of individual bearers at the radio network controller B. The bearer assignment request indicates the radio access bearer identification (RAB ID). The radio access bearer identification (RAB ID) carries the network service access point identifier (NSAPI) selected by the terminal A for the particular multimedia broadcast multicast service session.
Arrow 17: The radio access bearer identification (RAB ID) is provided to the terminal A in the radio bearer setup; the network service access point identifier (NSAPI) is carried by the radio access bearer identification (RAB ID) transparently through the radio network controller B to the terminal A. The terminal A uses the network service access point identifier (NSAPI) to recognize the multimedia broadcast multicast service it has to link the dedicated radio bearer to. In the internal protocol stack of the terminal A the network service access point identifier (NSAPI) is used to transport the multimedia broadcast multicast service information sent onto the dedicated radio bearer to the internet protocol multicast/multimedia broadcast multicast service application program interface (API) and hence the multimedia broadcast multicast service/internet protocol multicast application (the applications that will rely on the multimedia broadcast multicast service (as a transport optimisation) are applications that know internet protocol multicast; internet protocol multicast is defined by the IETF and can run on top of all kinds of access networks).
Arrow 18a: Confirmation message for arrow 16.
Arrow 18b: Confirmation message for arrow 16.
Finally, the multicast information will go from the core network E to the terminal A via the gateway support node D and the serving support node C and the radio network controller B.

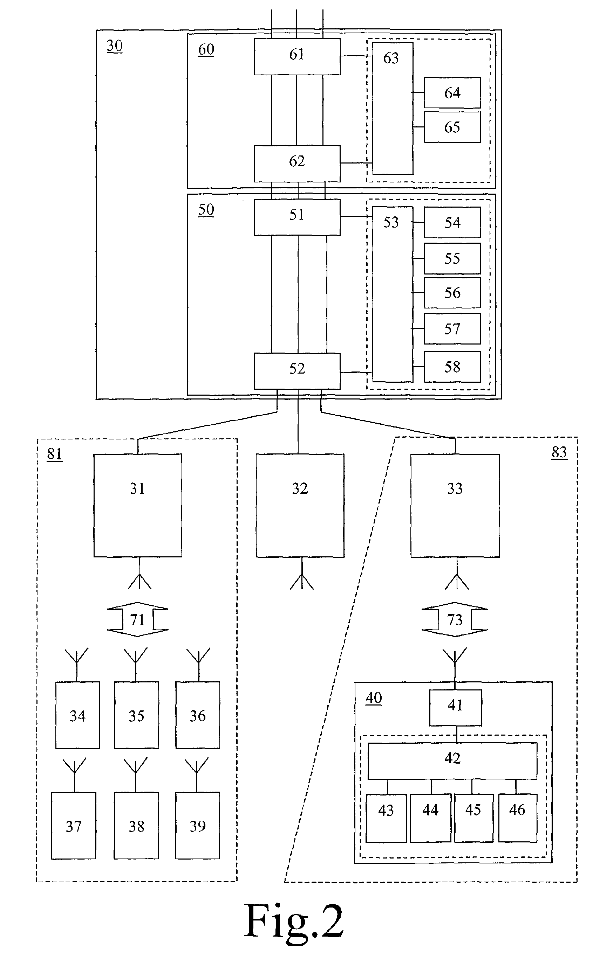

The system according to the invention as shown in Fig. 2 comprises a support node 30 according to the invention and a terminal 40 according to the invention for transmitting multicast information from the support node 30 to the terminal 40 via a radio network controller 33. The support node 30 comprises a serving (general packet radio service) support node 50 and a gateway (general packet radio service) support node 60.

The support node 50 comprises a first support interface 51 and a second support interface 52 coupled to each other and to a processor system comprising a processor 53, a service detector 54 for detecting a multicast service supported by the radio network controller 33, a contact instructor 55 for, in response to a negative detection result, instructing the radio network controller 33 to contact the terminal 40 individually, an identifier supplier 56 for supplying an access point identifier received from the terminal 40 to the bearer set up message to be transmitted to the terminal 40, a memory 57 and a module 58.

The gateway support node 60 comprises a first gateway interface 61 and a second gateway interface 62 coupled to each other and to a processor system comprising a processor 63, a memory 64 and a module 65. The first gateway interface 61 is further coupled to a core network, and the second gateway interface 62 is further coupled to the first support interface 51. The second support interface 52 is further coupled to radio network controllers 31-33.

The radio network controller 31 is located in a so-called hotspot area 81 and supports the multimedia broadcast multicast service.Via a multicast channel 71, the radio network controller 31 may send multicast information to terminals 34-39.

The radio network controller 33 is located in a so-called non-hotspot area 83 and does not support the multimedia broadcast multicast service.Via an individual channel 73, the radio network controller 31 may send multicast information to the terminal 40.

Between the radio network controllers 31,33 and the terminals 34-40, usually base stations or further nodes (like a so-called "node B") all not shown may be present.

The terminal 40 comprises a terminal interface 41 coupled to processor system comprising a processor 42, an identifier selector 43 for selecting an access point identifier to be sent to the support node 30 for identifying an individual bearer to be used for transmitting the multicast information to the terminal 40, an identifier detector 44 for detecting the access point identifier in a bearer set up message transmitted to the terminal 40, a memory 45 and a module 46.

In a prior art situation, the radio network controller 31 and its radio network in area 81 support the multicast service and use the multicast channel 71 to transmit the multicast information to the terminals 34-39.

According to the invention (first option), the radio network controller 33 does not support the multicast service, and uses an individual channel 73 to sends the multicast information to the terminal 40. The procedure is as follows:

The terminal 40 (terminal A in Fig. 1) activates a default best effort packet data protocol context (for example for an internet access) through an exchange of context signalling with the gateway support node 60 (gateway support node D in Fig. 1) (arrow 1 in Fig. 1). Thereto, between the terminal 40 and the radio network controller 33 for example a signalling channel not shown in Fig. 2 is used. The terminal 40 sends an Internet Engineering Task Force (IETF) internet multicast group management protocol joining message (for internet protocol version-4) or a multicast listeners discovery protocol joining message (for internet protocol version-6) to activate a multimedia broadcast multicast service on the default packet data protocol context, via the signalling channel and via the radio network controller 33 to the gateway support node 60 (arrow 2 in Fig. 1). Signaling information is exchanged between the gateway support node 60 and the core network not shown in Fig. 2 (core network E in Fig. 1) (arrow 3 in Fig. 1). The serving support node 50 (serving support node C in Fig. 1) receives a multimedia broadcast multicast service notification from the gateway support node 60, indicating the terminal 40 identity like an international mobile subscriber identification (IMSI) and a service identity (IP MC@) (arrow 4 in Fig. 1). The serving support node 50 sends a request multimedia broadcast multicast service context activation to the terminal 40 indicating the service identity (IP MC@) and a temporary mobile group identifier (TMGI), via the radio network controller 33 and the signalling channel (arrow 5 in Fig. 1). The terminal 40 selects a particular network service access point identifier (NSAPI) from its default range or based on a linked network service access point identifier (NSAPI) proposed by the core network (and remembers that this network service access point identifier is for the multimedia broadcast multicast service) via arrows 4,5 for a multimedia broadcast multicast service and sends via the signalling channel and the radio network controller 33 an activate multimedia broadcast multicast service context request to the serving support node 50, indicating the service identity (IP MC@) and the selected network service access point identifier (NSAPI) (arrow 6 in Fig. 1). The serving support node 50 sends a multimedia broadcast multicast service notification response comprising the international mobile subscriber identification (IMSI) to the gateway support node 60 (arrow 7 in Fig. 1). The serving support node 50 requests the establishment of the multimedia broadcast multicast service context to the gateway support node 60 and the core network authorizes the activation of the service for the terminal 40 (arrow 8 in Fig. 1). Signaling information is exchanged between the gateway support node 60 and the core network (arrow 9 in Fig. 1). Beyond the gateway support node 60, between the gateway support node 60 and for example the broadcast multicast service center, a bearer has to be setup (arrow 10 in Fig. 1). At a successful multimedia broadcast multicast service context setup by the gateway support node 60, the serving support node 50 receives a create multimedia broadcast multicast service context response. The serving support node 50 checks whether the radio network controller 33, which controls and communicates with the terminal 40, supports the multimedia broadcast multicast service. This done through a communication with the radio network controller 33 or with another entity or by checking an internal memory. In case the multimedia broadcast multicast service is not supported by the radio network controller 33, the serving support node 50 skips the prior art multimedia broadcast multicast service terminal 40 linking procedure (arrow 11 in Fig 1). The serving support node 50 performs a standardised registration procedure (according to 3GPP TS 23.846) (arrows 12a,b in Fig 1). The serving support node 50 sends an activate multimedia broadcast multicast service context accept to the terminal 40 via the signalling channel to indicate a successful activation of the multimedia broadcast multicast service context (arrow 13 in Fig. 1). At the beginning of a multimedia broadcast multicast service session, the gateway support node 60 receives a session start message from the core network. The gateway support node 60 indicates the session start to the serving support node 50, providing the service identity (IP MC@) and the temporary mobile group identifier (TMGI). The serving support node 50 knows that the radio network controller 33 does not support the multimedia broadcast multicast service and decides that dedicated bearers need to be set up towards the terminal 40 (arrows 14a,b,c,d in Fig 1). The serving support node 50 instructs the radio network controller 33 to contact all terminals 40, which have activated the multimedia broadcast multicast service identified by the service identity (IP MC@), individually, using for example a standardised paging technology based on the international mobile subscriber identification IMSI/P-TMSI via a paging channel not shown in Fig. 2 (arrow 15a in Fig. 1). The terminal 40 requests the setup of a signaling connection with the radio network controller 33 via the signalling channel (arrow 15b in Fig. 1). The terminal 40 sends a service request to the serving support node 50 indicating that it's ready to receive the multicast information via the signalling channel (arrow 15c in Fig. 1).The serving support node 50 requests the setup of individual bearers at the radio network controller 33. The bearer assignment request indicates the radio access bearer identification (RAB ID). The radio access bearer identification (RAB ID) carries the network service access point identifier (NSAPI) selected by the terminal 40 for the particular multimedia broadcast multicast service session (arrow 16 in Fig. 1). The radio access bearer identification (RAB ID) is provided to the terminal 40 in the radio bearer setup via the signalling channel; the network service access point identifier (NSAPI) is carried by the radio access bearer identification (RAB ID) transparently through the radio network controller 33 to the terminal 40 via the signalling channel. The terminal 40 uses the network service access point identifier (NSAPI) to recognize the multimedia broadcast multicast service it has to link the dedicated radio bearer to. In the internal protocol stack of the terminal 40 the network service access point identifier (NSAPI) is used to transport the multimedia broadcast multicast service information sent onto the dedicated radio bearer to the internet protocol multicast/multimedia broadcast multicast service API and hence the multimedia broadcast multicast service/internet protocol multicast application (arrow 17 in Fig. 1). Confirmation messages for arrow 16 are sent (arrows 18a,b in Fig 1). Finally, the multicast information will go from the support node 30 via the radio network controller 33 to the terminal 40.

Preferably, but not exclusively, the support node 30 is a general packet radio service support node, the multicast service is a multimedia broadcast multicast service, the negative detection result indicates that the radio network controller 33 does not support the multimedia broadcast multicast service, the terminal 40 is contacted individually through paging, the access point identifier is a network service access point identifier to be used for a multimedia broadcast multicast service, and the bearer set up message is a radio access bearer set up message.

Module 65 for example takes care of processing (parts of) messages and information according to the arrows 3, 4, 7, 8, 9, 10, 12a, 12b, 14a, 14b, 14c and 14d as described in Fig. 1. Module 58 for example takes care of processing (parts of) messages and information according to the arrows 4, 5, 6, 7, 8, 11, 12b, 13, 14c, 14d, 15a, 15c, 16, 18a and 18b as described in Fig. 1. Module 46 for example takes care of processing (parts of) messages and information according to the arrows 1, 2, 5, 6, 13, 15b, 15c and 17 as described in Fig. 1.

Alternatively, and/or in addition, according to the invention (second option), a radio network controller supports the multicast service, but one or more parts of the radio network as controlled by this radio network controller do not. These parts for example correspond with base stations or further nodes like a so-called "node B". In that case, via the parts not supporting the multicast service, individual channels are to be used to reach one or more terminals. The radio network controller according to the invention comprises
- a service detector for detecting a multicast service supported by at least a part of the radio network (a base station or a further node like a so-called "node B"); and
- a contact instructor for, in response to a negative detection result, instructing at least a part of the radio network to contact the terminals individually.

In this case, the service detector and the contact instructor are introduced in the radio network controller, which can detect whether the part of the radio network supports one or more multicast services, and if the part of the radio network supports one or more multicast services, the radio network controller can detect which multicast service is and/or which multicast services are supported by the part of the radio network. In response to a negative detection result (indicating that the part of the radio network either does not support a multicast service or supports an other different multicast service which is not supported by the radio network controller), the radio network controller can instruct the part of the radio network to contact the terminals individually, instead of contacting the terminals as a group. So, the multicast information can now be delivered independently of whether the entire radio network as controlled by the radio network controller is adapted to handle the (same) multicast service.

The expression "for" in for example "for transmitting", "for detecting", "for instructing", "for selecting" and "for supplying" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities.

The steps of detecting. instructing, selecting and supplying do not exclude further steps, like for example, inter alia, the steps described for Fig. 1 and 2. For Fig. 1, alternatives will be possible, without departing from the scope of this invention, like for example alternative steps, additional steps, combined steps and alternative combinations of steps etc. For Fig. 2, alternatives will be possible, without departing from the scope of this invention, like for example alternative processor-systems and/or interfaces, additional processor-systems and/or interfaces, combined processor-systems and/or interfaces and alternative combinations of processor-systems and/or interfaces etc. In Fig. 2, the service detector 54, the contact instructor 55, the identifier supplier 56, the module 58, the module 65, the identifier selector 43, the identifier detector 44 and the module 46 may be hardware, software or a mixture of both.

## Claims

1. System comprising a support node (30), a radio network controller (33) and terminals (40) for transmitting multicast information from the support node (30) to the terminals (40) via a radio network controlled by the radio network controller (33), **characterised in that** the system comprises
- a service detector (54) for detecting a multicast service supported by at least a part of the radio network; and
- a contact instructor (55) for, in response to a negative detection result, instructing at least a part of the radio network to contact the terminals (40) individually.

2. System as defined in claim 1, **characterised in that** the support node (30) is a general packet radio service support node, **in that** the multicast service is a multimedia broadcast multicast service, **in that** the negative detection result indicates that the radio network controller (33) does not support the multimedia broadcast multicast service, and **in that** the terminals (40) are contacted individually through paging.

3. System as defined in claim 1, **characterised in that** at least one terminal (40) comprises
- an identifier selector (43) for selecting an access point identifier to be sent to the support node for identifying an individual bearer to be used for transmitting the multicast information to the terminal (40); and
- an identifier detector (44) for detecting the access point identifier in a bearer set up message transmitted to the terminal (40); with the support node (30) comprising
- an identifier supplier (56) for supplying the access point identifier received from the terminal (40) to the bearer set up message to be transmitted to the terminal (40).

4. System as defined in claim 3, **characterised in that** the access point identifier is a network service access point identifier to be used for a multimedia broadcast multicast service, and **in that** the bearer set up message is a radio access bearer set up message.

5. Support node (30) for use in a system comprising the support node (30), a radio network controller (33) and terminals (40) for transmitting multicast information from the support node (30) to the terminals (40) via the radio network controller (33), **characterised in that** the support node (30) comprises
- a service detector (54) for detecting a multicast service supported by the radio network controller (33); and
- a contact instructor (55) for, in response to a negative detection result, instructing the radio network controller (33) to contact the terminals (40) individually.

6. Support node processor program product for use in a system comprising a support node (30), a radio network controller (33) and terminals (40) for transmitting multicast information from the support node (30) to the terminals (40) via the radio network controller (33), **characterised in that** the support node processor program product comprises
- a service detecting function for detecting a multicast service supported by the radio network controller (33); and
- a contact instructing function for, in response to a negative detection result, instructing the radio network controller (33) to contact the terminals (40) individually.

7. Terminal (40) for use in a system comprising a support node (30), a radio network controller (33) and the terminal (40) for transmitting multicast information from the support node (30) to the terminal (40) via the radio network controller (33), **characterised in that** the terminal (40) comprises
- an identifier selector (43) for selecting an access point identifier to be sent to the support node (30) for identifying an individual bearer to be used for transmitting the multicast information to the terminal (40); and
- an identifier detector (44) for detecting the access point identifier in a bearer set up message transmitted to the terminal (40).

8. Terminal processor program product for use in a system comprising a support node (30), a radio network controller (33) and a terminal (40) for transmitting multicast information from the support node (30) to the terminal (40) via the radio network controller (33), **characterised in that** the terminal processor program product comprises
- an identifier selecting function for selecting an access point identifier to be sent to the support node (30) for identifying an individual bearer to be used for transmitting the multicast information to the terminal (40); and
- an identifier detecting function for detecting the access point identifier in a bearer set up message transmitted to the terminal (40).

9. Radio network controller (33) for use in a system comprising a support node (30), the radio network controller (33) and terminals (40) for transmitting multicast information from the support node (30) to the terminals (40) via a radio network controlled by the radio network controller (33), **characterised in that** the radio network controller (33) comprises
- a service detector for detecting a multicast service supported by at least a part of the radio network; and
- a contact instructor for, in response to a negative detection result, instructing at least a part of the radio network to contact the terminals (40) individually.

10. Radio network controller processor program product for use in a system comprising a support node (30), a radio network controller (33) and terminals (40) for transmitting multicast information from the support node (30) to the terminals (40) via a radio network controlled by the radio network controller (33), **characterised in that** the radio network controller processor program product comprises
- a service detecting function for detecting a multicast service supported by at least a part of the radio network; and
- a contact instructing function for, in response to a negative detection result, instructing at least a part of the radio network to contact the terminals (40) individually.

11. Method for transmitting multicast information from a support node (30) to terminals (40) via a radio network controlled by a radio network controller (33), **characterised in that** the method comprises the steps of
- detecting a multicast service supported by at least a part of the radio network; and
- in response to a negative detection result, instructing at least a part of the radio network to contact the terminals (40) individually.

12. Method as defined in claim 11, **characterised in that** the support node (30) is a general packet radio service support node, **in that** the multicast service is a multimedia broadcast multicast service, **in that** the negative detection result indicates that the radio network controller (33) does not support the multimedia broadcast multicast service, and **in that** the terminals (40) are contacted individually through paging.

13. Method as defined in claim 11, **characterised in that** the method comprises the steps of
- selecting, in at least one terminal (40), an access point identifier to be sent to the support node (30) for identifying an individual bearer to be used for transmitting the multicast information to the terminal (40);
- supplying, in the support node (30), the access point identifier received from the terminal (40) to a bearer set up message to be transmitted to the terminal (40); and
- detecting, in at least one terminal (40), the access point identifier in a bearer set up message transmitted to the terminal (40).

14. Method as defined in claim 13, **characterised in that** the access point identifier is a network service access point identifier to be used for a multimedia broadcast multicast service, and **in that** the bearer set up message is a radio access bearer set up message.
